# EUROPEAN PATENT SPECIFICATION

(11) **EP 0 720 630 B1**
(45) Date of publication and mention of the grant of the patent: **17.03.1999**
(21) Application number: 94928824.5
(22) Date of filing: 23.09.1994
(51) Int. Cl.: C08G 59/24, C08L 63/00

(54) **EPOXY RESIN COMPOSITION**
EPOXYDHARZZUSAMMENSETZUNG
COMPOSITION DE RESINE EPOXY

(30) Priority: 24.09.1993 JP 258967/93
(43) Date of publication of application: 10.07.1996
(73) Proprietor: SHELL INTERNATIONALE RESEARCH MAATSCHAPPIJ B.V., 2596 HR Den Haag (NL)
(72) Inventor: MURATA, Yasuyuki c/o Yuka Shell Epoxy KK, Minato-ku Tokyo 106 (JP); NAKANISHI, Yoshinori c/o Yuka Shell Epoxy KK, Minato-ku Tokyo 106 (JP); OCHI, Mitsukazu, Osaka (JP)
(86) International application number: PCT/EP94/03215
(87) International publication number: WO 95/08584

(56) References cited:
- EP-A- 0 403 022
- EP-A- 0 553 371
- DE-A- 4 135 533
- PATENT ABSTRACTS OF JAPAN vol. 13, no. 236 (C-602) 30 May 1989 & JP,A,01 043 521 (TORAY IND INC) 15 February 1989
- DATABASE WPI Derwent Publications Ltd., London, GB; AN 92-289686 & JP,A,4 199 856 (NITTO DENKO CORP) 21 July 1992

## Description

The present invention relates to an epoxy resin composition to articles comprising said epoxy resin composition in the cured state, to a process for the preparation of said epoxy resin composition and to the use of said epoxy resin composition.

Epoxy resin compositions are used in many areas, such as laminating, coating, adhesion, sealing and moulding. In most of these areas the conditions of use have become more severeand as a consequence thereof epoxy resin compositions containing standard bisphenol A-type epoxy resins, often do not meet today's performance requirements. To overcome this problem several epoxy resins have been proposed in the past.

For example polyfunctional-type epoxy resins, such as novolak-type epoxy resins, trifunctional-type epoxy resins and tetrafunctional-type epoxy resins improve the heat resistance of the cured epoxy resin composition however, said cured compositions do not have sufficient strength at high temperatures, and are rigid and brittle.

From Polymer, Vol. 33, p. 2975 and onward, 1992, it follows that when biphenol-type epoxy resins when cured with diaminodiphenylmethane, the cured compositions have excellent mechanical properties at high temperatures; however, the thermal stability of these cured compositions is insufficient.

Finally, even epoxy resin compositions comprising biphenol-type epoxy resins, and common phenolic curing agents such as a phenol novolak, the latter known to contribute to thermal stability, do not have sufficiently improved mechanical properties at high temperatures in the cured state.

The present invention therefore aims at providing an epoxy resin composition which when cured has high heat resistance, i.e., has a high level of stability and a high level of strength at high temperatures.

The present invention thus relates to an epoxy composition comprising (a) a biphenol-type epoxy compound by the following general formula (I): 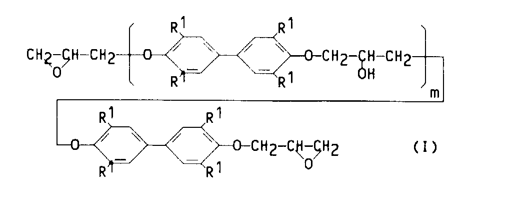 wherein R¹ is a hydrogen atom, a halogen atom, an alkyl group of from 1 to 10 carbon atoms, a substituted or unsubstituted phenyl group, a substituted or unsubstituted aralkyl group or an alkoxy group, each R¹ being the same or different, and m is a number having an average value in the range of from 0 to 5; and (b) a polyhydric phenol resin curing agent derived from a polyhydric phenol compound having 2 or more phenolic hydroxyl groups attached at adjacent positions on the aromatic ring, provided the epoxy resin does not contain 100% by weight, based on the weight of the biphenol-type epoxy resin, of the compound of the general formula 1 wherein all R¹ groups are hydrogen, and provided the epoxy composition does not comprise a resin mixture obtained by dispersing, in the form of particulates, in a dispersion medium which is a portion or all of at least one of the epoxy compound and the phenolic compound, a mixture of a vinyl group-containing organopolysiloxane and a ≡ SiH group-containing organopolysiloxane whose total volatile loss after heating at 105 °C for three hours is not more than 3% by weight, and
allowing the vinyl group-containing organopolysiloxane and the ≡ SiH group-containing organopolysiloxane to react with each other and to cure.

The biphenol-type epoxy resin (a) represented by the above general formula (I), is obtained by a condensation reaction of its precursor biphenol with epichlorohydrin in the presence of an alkali salt.

The biphenol to be used as a starting material for the production of the biphenol-type epoxy resin may be, for example, 3,3'-dimethyl-4,4'-biphenol, 3,5'dimethyl-4,4'-biphenol, 3,3'-dibutyl-4,4'-biphenol, 3,5-dibutyl-4,4'-biphenol, 3,3'-diphenyl-4,4'-biphenol, 3,3'-dibromo-4,4'-biphenol, 3,3',5,5'-tetramethyl-4,4'-biphenol, 3,3'-dimethyl-5,5'-dibutyl-4,4'-biphenol, 3,3',5,5'-tetrabutyl-4,4'-biphenol, 3,3',5,5'-tetrabromo-4,4'-biphenol, or any mixture of two or more of the above-mentioned biphenols, or any mixture of 4,4-biphenol with two or more of the above-mentioned biphenols. The biphenol starting material for the biphenol-type epoxy resin may not consist for 100% of 4,4-biphenol since the resulting biphenol-type epoxy resins will have too high melting point and poor solubility which makes them poorly processable and poorly compatible with curing agents and other epoxy resins.

Suitable commercially available biphenol-type epoxy resins (a) are: EPIKOTE YX 4000 (an epoxy resin derived from 3,3',5,5'-tetramethyl-4,4'-biphenol) and EPIKOTE YL 6121 (a 50:50 (weight ratio) mixture of an epoxy resin derived from 3,3',5,5'-tetramethyl-4,4'-biphenol and an epoxy resin derived from 4,4'-biphenol), both commercially available from Yuka Shell Epoxy K.K. (EPIKOTE is a trade mark).

Suitable polyhydric phenol compounds having 2 or more phenolic hydroxyl groups attached at adjacent positions on their aromatic rings that can be used for the preparation of the polyhydric phenol resin curing agent (b) are: catechol, methylcatechol, dimethylcatechol, butylcatechol, phenylcatechol, methoxycatechol, pyrogallol, hydroxyhydroquinone, tetrahydroxybenzene, bromocatechol, 1,2-dihydroxynaphthalene, methyl-1,2-dihydroxynaphthalene, dimethyl-1,2-dihydroxynaphthalene, butyl-1,2-dihydroxynaphthalene, methoxy-1,2-dihydroxynaphthalene, hydroxy-1,2-dihydroxynaphthalene, dihydroxy-1,2-dihydroxynaphthalene, bromo-1,2-dihydroxynaphthalene, 2,3-dihydroxynaphthalene, methyl-2,3-dihydroxynaphthalene, dimethyl-2,3-dihydroxynaphthalene,butyl-2,3-dihydroxynaphthalene, methoxy-2,3-dihydroxynaphthalene, hydroxy-2,3-dihydroxynaphthalene, dihydroxy-2,3-dihydroxynaphthalene, bromo-2,3-dihydroxynaphthalene, 1,8-dihydroxynaphthalene, methyl-1,8-dihydroxynaphthalene, dimethyl-1,8-dihydroxynaphthalene, butyl-1,8-dihydroxynaphthalene, methoxy-1,8-dihydroxynaphthalene, hydroxy-1,8-dihydroxynaphthalene, dihydroxy-1,8-dihydroxy and bromo-1,8-dihydroxynaphthalene.

There are no particular restrictions as to the process for the preparation of the polyhydric phenol resin curing agent (b).

A suitable process is the oligomerization of the above-mentioned polyhydric phenol compound having 2 or more phenolic hydroxyl groups attached at adjacent positions on the aromatic ring, via an addition-condensation reaction with a compound having a carbonyl group, an addition reaction with a compound having an unsaturated bond, or a condensation reaction with an α-hydroxyalkylbenzene or α-alkoxyalkylbenzene.

Examples of the above-mentioned compounds having a carbonyl group are: any type of aldehyde or ketone, such as in particular formaldehyde, paraformaldehyde, acetoaldehyde, benzaldehyde, hydroxybenzaldehyde, glyoxal, terephthalaldehyde, acetone, cyclohexanone and acetophenone.

Examples of the above-mentioned compounds having an unsaturated bond are: divinylbenzene, diisopropenylbenzene, diisopropenylnaphthalene, dicyclopentadiene, norbornene and terpene.

Examples of compounds having both a carbonyl group and an unsaturated bond are: crotonaldehyde and isopropenylacetophenone.

Examples of α-hydroxyalkylbenzenes and α-alkoxyalkylbenzenes are: α,α'-dihydroxyxylene, α,α'-dihydroxydiisopropylbenzene, α,α'-dimethoxyxylene, dihydroxymethylphenol, trihydroxymethylbenzene, trihydroxymethylphenol, dihydroxymethylcresol and tetrahydroxymethylbisphenol A.

The oligomerization reaction referred to above may suitably be carried out in the presence of an acid catalyst, at a temperature of 20-200 °C, for a period of from 1 to 20 hours.

If desired, the polyhydric phenol resin curing agent (b) may also be prepared from a mixture of the polyhydric phenol compound which has 2 or more phenolic hydroxyl groups attached at adjacent positions on the aromatic ring, with other phenols. The amount of said other phenols used in said mixture is preferably 50 wt% or less based on the total weight of the mixture containing the phenols, since an amount of more than 50% by weight would have a too large negative effect on the mechanical properties of the cured epoxy resin composition.

The larger the amount used in the oligomerization reaction of the compound having a carbonyl group, the compound having an unsaturated bond, or the α-hydroxyalkylbenzene or α-alkoxyalkylbenzene, relative to the total amount of phenol compounds, the larger the molecules of the resulting polyhydric phenol resin will be which will positively affect the heat resistance of the cured epoxy resin composition comprising said polyhydric phenol resin. It will be understood that such large molecules also increase the viscosity of the epoxy resin composition so that care must be taken not to use such large amounts thereof so that processing of the epoxy resin composition becomes difficult. Normally, the amount of the compound having a carbonyl group, the compound having an unsaturated bond, or the a-hydroxyalkylbenzene or a-alkoxyalkylbenzene, to be used is of from 0.1 to 1.0 moles, and preferably of from 0.2 to 0.8 moles, per 1 mole of the total amount of phenol compounds.

Suitable acidic catalysts used in the oligomerization reaction are for example, hydrochloric acid, sulfuric acid, oxalic acid, toluenesulfonic acid, organic acid salts which exhibit acidity, fluoroboric acid, heteropoly acids and activated clay. A suitable amount of the acidic catalyst to be used is of from 0.1 to 5 parts by weight per 100 parts by weight of the total amount of phenol compounds.

Inert solvents may also be used in the oligomerization reaction. Such inert solvents are for example aromatic hydrocarbons, alcohols, ethers and ketones.

When the polyhydric phenol resin curing agent (b) is produced by a reacting catechol with formaldehyde, the resulting polyhydric phenol resin can be represented by the following structural formula (XI): 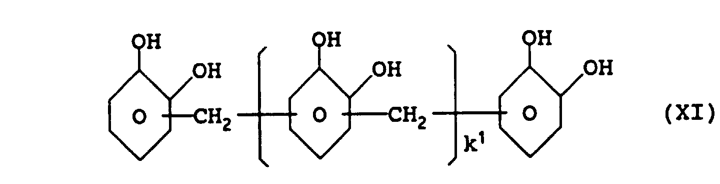 wherein k¹ is a number with an average value in the range of from 0 to 10. When the polyhydric phenol resin curing agent (b) is produced by a reacting 1,2-dihydroxynaphthalene with α,α'-dihydroxyxylene, the resulting polyhydric phenol resin can be represented by the following structural formula (XII): 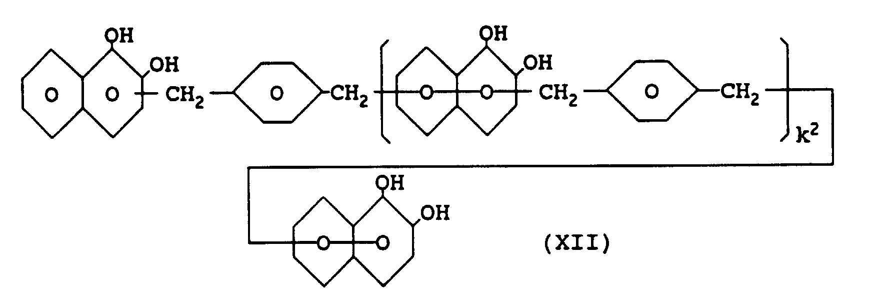 wherein k² is a number with an average value in the range of from 0 to 10.

Particularly preferred polyhydric phenol resin curing agents (b) according to the present invention are those represented by the following general formula (II):

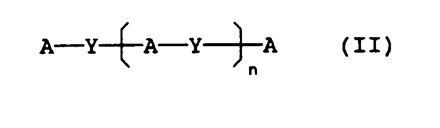

In the above general formula (II), A is a monovalent or divalent residual group derived from a polyhydric phenol compound represented by the following general formula (III), (IV), (V) or (VI), and each A may be the same or different; Y is a divalent residual group represented by the following general formula (VII), (VIII), (IX) or (X), and each Y may be the same or different; and n is a number with an average value in the range of from 0 to 10; 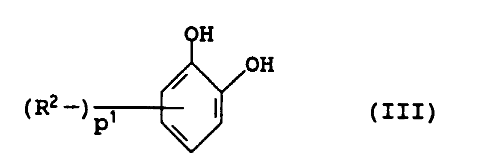 wherein R² is an alkyl group in the range of from 1 to 10 carbon atoms, a substituted or unsubstituted phenyl group, a substituted or unsubstituted aralkyl group, an alkoxy group, a hydroxyl group or a halogen atom, each R² being the same or different, and p¹ is an integer of from 0 to 2; 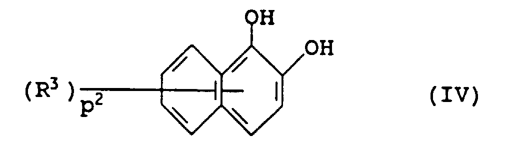 wherein R³ is an alkyl group in the range of from 1 to 10 carbon atoms, a substituted or unsubstituted phenyl group, a substituted or unsubstituted aralkyl group, an alkoxy group, a hydroxyl group or a halogen atom, each R³ being the same or different, and p² is an integer of from 0 to 4; 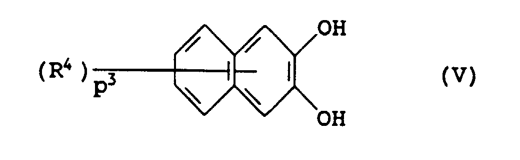 wherein R⁴ is an alkyl group in the range of from 1 to 10 carbon atoms, a substituted or unsubstituted phenyl group, a substituted or unsubstituted aralkyl group, an alkoxy group, a hydroxyl group or a halogen atom, each R⁴ being the same or different, and p³ is an integer of from 0 to 4; 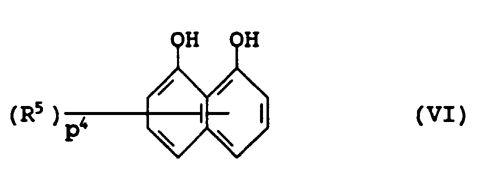 wherein R⁵ is an alkyl group in the range of from 1 to 10 carbon atoms, a substituted or unsubstituted phenyl group, a substituted or unsubstituted aralkyl group, an alkoxy group, a hydroxyl group or a halogen atom, each R⁵ being the same or different, and p⁴ is an integer of from 0 to 4; 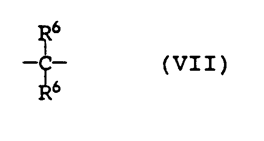 wherein R⁶ is a hydrogen atom, an alkyl group in the range of from 1 to 10 carbon atoms, a substituted or unsubstituted phenyl group, a substituted or unsubstituted aralkyl group, an alkoxy group, a hydroxyl group or a halogen atom, each R⁶ being the same or different; 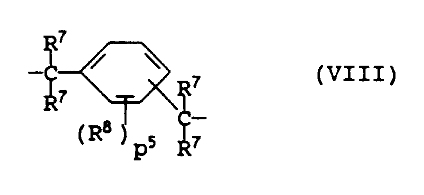 wherein R⁷ and R⁸ are each a hydrogen atom, an alkyl group in the range of from 1 to 10 carbon atoms, a substituted or unsubstituted phenyl group, a substituted or unsubstituted aralkyl group, an alkoxy group, a hydroxyl group or a halogen atom, R⁷ and R⁸ being either identical to each other or different, and p⁵ is an integer of from 0 to 4;

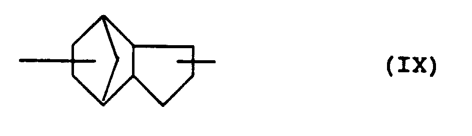

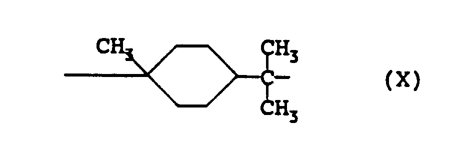

The polyhydric phenol resin curing agent b) used in the epoxy resin composition according to the invention is derived from a polyhydric phenol compound having 2 or more phenolic hydroxyl groups attached at adjacent positions on the aromatic ring. It was found that if a polyhydric phenol resin curing agent derived from a polyhydric phenol compound with only 1 phenolic hydroxyl group on each aromatic ring is used, or if a polyhydric phenol resin curing agent derived from a polyhydric phenol compound having 2 phenolic hydroxyl groups attached at non-adjacent positions on the aromatic ring is used, cured product has insufficient mechanical strength at high temperatures.

The amount of polyhydric phenol resin curing agent b) used in the epoxy resin composition according to the present invention depends on the specific biphenol-type epoxy resin and specific polyhydric phenol curing agent but must be sufficient to obtain full cure.

Suitably the epoxy resin composition of the present invention comprises of from 20 to 90 parts by weight, preferably of from 30 to 80 parts by weight of the polyhydric phenol resin curing agent b) per 100 parts by weight of the biphenol-type epoxy resin.

The epoxy resin composition according to the present invention may further comprise epoxy resins other than biphenol-type epoxy resins (a).

Said other epoxy resins are, for example: i) epoxy resins prepared by reacting epichlorohydrin with a phenol or a phenolic compound the latter including a polyhydric phenol resins obtained by a condensation reaction of a phenol with an aldehyde such as hydroxybenzaldehyde, crotonaldehyde and glyoxal, wherein said phenols or phenolic compounds are for example bisphenol A, bisphenol F, bisphenol AD, hydroquinone, resorcin, methylresorcin, dihydroxynaphthalene, phenol novolak resin, cresol novolak resin, bisphenol A novolak resin, dicyclopentadiene phenol resin, terpene phenol resin, phenolaralkyl resin and naphthol novolak resin; ii) epoxy resins prepared by reacting epichlorohydrin with an amine compound such as diaminodiphenylmethane, aminophenol and xylenediamine; and iii) epoxy resins prepared by reacting epichloro-hydrin with carboxylic acids such as methylhexahydroxyphthalic acid and dimer acid.

The amount of these other epoxy resins used in the epoxy resin composition according to the present invention is preferably 200 parts by weight or less per 100 parts by weight of the biphenol-type epoxy resin (a). If these other epoxy resins used in too large amounts, the epoxy resin compositions according to the present invention will not show the desired level of mechanical strength.

The epoxy resin composition according to the present invention may further comprise another epoxy resin curing agent in admixture with the polyhydric phenol resin curing agent b) derived from a polyhydric phenol compound having 2 or more phenolic hydroxyl groups attached at adjacent positions on the aromatic ring.

Examples of such other curing agents are: i) various phenol resins including phenol novolak resins, cresol novolak resins, bisphenol A novolak resins, dicyclopentadiene phenol resins, phenolaralkyl resins, terpene phenol resins, polyhydric phenol resins obtained by reacting a phenol with an aldehyde such as hydroxybenzaldehyde, crotonaldehyde, glyoxal; ii) acid anhydrides such as methyltetrahydrophthalic anhydride, hexahydrophthalic anhydride, pyromellitic anhydride and methyl nadic anhydride; and iii) amines such as diethylenetriamine, isopholonediamine, diaminodiphenylmethane and diaminodiphenylsulfone.

These other epoxy resin curing agents are preferably used in an amount of from 200 parts by weight or less per 100 parts of the polyhydric phenol resin curing agent b) derived from a polyhydric phenol compound having 2 or more phenolic hydroxyl groups attached at adjacent positions on the aromatic ring. If these other epoxy resin curing agents are used in too large amounts, the epoxy resin compositions according to the present invention will not show the desired level of mechanical strength.

The epoxy resin composition according to the present invention may further contain additives commonly used in epoxy resin compositions, such as, for example, curing accelerators, fillers, coupling agents, flame retardants, plasticizers, solvents, reactive diluents and pigments. The amounts used of such additives will depend on the particular application of the composition.

Examples of suitable curing accelerators are: imidazoles such as 2-methylimidazole and 2-ethyl-4-methylimidazole; amines such as 2,4,6-tris(dimethylaminomethyl) phenol and benzyldimethylamine; and organic phosphoric compounds such as tributylphosphine, triphenylphosphine and tris(dimethoxyphenyl) phosphine.

Examples of suitable fillers are: fused silica, crystalline silica, glass powder, alumina and calcium carbonate.

Examples of suitable flame retardants are: antimony trioxide, phosphoric acid, and brominated epoxy resins.

The epoxy resin compositions according to the present invention have in the cured state high stability and high strength at high temperatures, and can be suitably used as an adhesive, as a casting composition, as a sealant, as a moulding composition, and in the preparation of laminates.

The present invention is illustrated by the experiments presented below:

### Preparation 1:

Into a 1000 ml three-necked flask equipped with a thermometer, stirring apparatus and cooling tube were charged 330 g of catechol, 300 g of methyl isobutyl ketone and 5 g of oxalic acid, followed by heating to 80 °C for uniform dissolution.

Next 175 g of a 36% aqueous formaldehyde solution was added dropwise to the solution over a period of 1 hour while keeping the internal temperature of the solution at 80 °C. The components were then allowed to react at 90 °C for 3 hours.

Successively, the water and methyl isobutyl ketone were distilled off while gradually increasing the temperature, and finally the water, methyl isobutyl ketone and the unreacted catechol were completely distilled off while keeping the solution at 180 °C under a reduced pressure of 3 mmHg for 3 hours, to obtain a polyhydric phenol resin curing agent consisting of a catechol/formaldehyde condensation compound.

This polyhydric phenol resin curing agent was a yellowish-red solid with 59 g/eq. of phenolic hydroxyl equivalents and a softening point of 87 °C.

### Preparation 2:

The process as described in preparation 1 was repeated except that 290 g of α,α'-dihydroxyxylene was used in place of 175 g of the 36% aqueous formaldehyde solution.

The polyhydric phenol resin curing agent obtained (a catechol/α,α'-dihydroxyxylene condensation compound) was a yellowish-red solid with 138 g/eq. of phenolic hydroxyl equivalents and a softening point of 81 °C.

### Preparation 3:

The process as described in preparation 1 was repeated except that 530 g of 2,3-dihydroxynaphthalene was used in place of 330 g of catechol.

The polyhydric phenol resin curing agent obtained (a 2,3-dihydroxynaphthalene/formaldehyde condensation compound) was a reddish-brown solid with 91 g/eq. of phenolic hydroxyl equivalents and a softening point of 102 °C.

### Preparation 4:

The process as described in preparation 1 was repeated except that 330 g of hydroquinone was used in place of 330 g of catechol.

This polyhydric phenol resin curing agent (a hydroquinone/formaldehyde condensation compound) was a reddish-brown solid with 60 g/eq. of phenolic hydroxyl equivalents and a softening point of 85 °C.

### Examples 1-4 and comparisons 1-4

As shown in Table 1, as the epoxy resin was used a commercially available epoxy resin derived from 3,3',5,5'-tetramethyl-4,4'-biphenol, or a commercially available epoxy resin consisting of a mixture of an epoxy resin derived from 4,4'-biphenol and an epoxy resin derived from 3,3',5,5'-tetramethyl-4,4'-biphenol, or an o-cresol novolak-type epoxy resin; as the curing agent was used each of the polyhydric phenol resin compositions obtained in Preparations 1-4 above, or diaminodiphenylmethane, or a commercially available phenol novolak resin; triphenylphosphine was incorporated into each of the epoxy resin compositions except for comparison 2 as a curing accelerator.

First, the epoxy resin and the curing agent were melted at a temperature of 100-120 °C and mixed for 5 minutes, the curing accelerator was added thereto and the resulting mixture was rapidly mixed and then poured into a metal mould and allowed to cure at 180 °C for 8 hours.

The cured product was cut to obtain samples for the measurement of flexural strength and samples for the measurement of thermal stability, and the results of the flexural strength and thermal stability tests at high temperature with these samples are shown in Table 1. The epoxy resin compositions according to the present invention (examples 1-4) all showed good processability, and from the data presented in table 1 it follows that each of the moulding materials of Examples 1-4 produced cured products with better flexural strength and better thermal stability at high temperatures as compared to the moulding materials of Comparisons 1-4.

**Table 1**

| | Composition (parts by weight) | | | Properties of cured product | |
|---|---|---|---|---|---|
| | Epoxy resin ^{*1}and content | Curing agent and content | Content of curing accelerator (triphenyl phosphine) | Flexural strength 200 °C (kg/cm²) | Thermal stability *3(°C) |
| Ex. 1 | A | Prep. 1 | 1 | 3.2 | 405 |
| | 100 | 32 | | | |
| Ex. 2 | B | Prep. 1 | 1 | 3.6 | 403 |
| | 100 | 34 | | | |
| Ex. 3 | A | Prep. 2 | 1 | 3.0 | 390 |
| | 100 | 74 | | | |
| Ex. 4 | A | Prep. 3 | 1 | 3.1 | 403 |
| | 100 | 49 | | | |
| Comp. 1 | C | Prep. 1 | 1 | 0.3 | 399 |
| | 100 | 28 | | | |
| Comp. 2 | A | Diamino diphenyl methane | 0 | 3.0 | 375 |
| | 100 | 27 | | | |
| Comp. 3 | A | Phenol novolak resin *2 | 1 | 0.2 | 396 |
| | 100 | 55 | | | |
| Comp. 4 | A | Prep. 4 | 1 | 0.5 | 405 |
| | 100 | 32 | | | |

| | | | | | |
|---|---|---|---|---|---|
| Footnotes for Table 1: Epoxy resin (*1) A: Epoxy resin derived from 3,3',5,5'-tetramethyl-4,4'-biphenol (EPIKOTE YX4000, trade name of Yuka Shell Epoxy K.K.; Epoxy eq. 186 mmol/kg) B: 50:50 (weight ratio) mixture of an epoxy resin derived from 4,4'-biphenol and an epoxy resin derived from 3,3',5,5'-tetramethyl-4,4'-biphenol (EPIKOTE YL6121, trade name of Yuka Shell Epoxy K.K.; Epoxy eq. 172 mmol/kg) C: o-cresol novolak-type epoxy resin (EPIKOTE 180S65, trade name of Yuka Shell Epoxy Co.; Epoxy eq. 210 mmol/kg) | | | | | |
| *2 - Phenol novolak resin, product of Gun-ei Kagaku Co., Hydroxy eq. 103 mmol/kg, softening point 85 °C | | | | | |
| *3 - Determined 5% weight loss temperature using a thermobalance. | | | | | |

## Claims

1. An epoxy composition comprising (a) a biphenol-type epoxy compound represented by the following general formula (I): 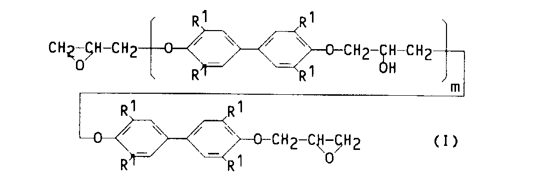 wherein R¹ is a hydrogen atom, a halogen atom, an alkyl group of from 1 to 10 carbon atoms, a substituted or unsubstituted phenyl group, a substituted or unsubstituted aralkyl group or an alkoxy group, each R¹ being the same or different, and m is a number having an average value in the range of from 0 to 5; and (b) a polyhydric phenol resin curing agent derived from a polyhydric phenol compound having 2 or more phenolic hydroxyl groups attached at adjacent positions on the aromatic ring, provided the epoxy resin does not contain 100% by weight, based on the weight of the biphenol type epoxy resin, of the compound of the general formula (I) wherein all R¹ groups are hydrogen, and provided the epoxy composition does not comprise a resin mixture obtained by dispersing, in the form of particulates, in a dispersion medium which is a portion or all of at least one of the epoxy compound and the phenolic compound, a mixture of a vinyl group-containing organopolysiloxane and a ≡ SiH group-containing organopolysiloxane whose total volatile loss after heating at 105 °C for three hours is not more than 3% by weight, and
and in which the vinyl group-containing organopolysiloxane and the ≡ SiH group-containing organopolysiloxane are allowed to react with each other and to cure.

2. An epoxy resin composition as claimed in claim 1, wherein the polyhydric phenol resin curing agent (b) is a compound represented by the following general formula (II): 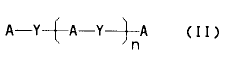 wherein A is a monovalent or divalent residual group derived from a polyhydric phenol compound represented by the following general formula (III), (IV), (V) or (VI), and each A may be the same or different; Y is a divalent residual group represented by the following general formula (VII), (VIII), (IX) or (X), and each Y may be the same or different; an n is a number having an average value of from 0 to 10; 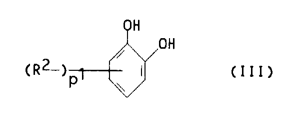 wherein R² is an alkyl group of from 1 to 10 carbon atoms, a substituted or unsubstituted phenyl group, a substituted or unsubstituted aralkyl group, an alkoxy group, a hydroxyl group or a halogen atom, each R² being the same or different, and p¹ is an integer of from 0 to 2; 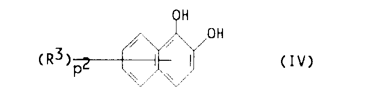 wherein R³ is an alkyl group of from 1 to 10 carbon atoms, a substituted or unsubstituted phenyl group, a substituted or unsubstituted aralkyl group, an alkoxy group, a hydroxyl group or a halogen atom, each R³ being the same or different, and p² is an integer of from 0 to 4; 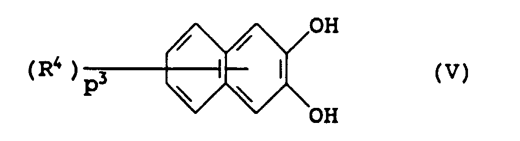 wherein R⁴ is an alkyl group of from 1 to 10 carbon atoms, a substituted or unsubstituted phenyl group, a substituted or unsubstituted aralkyl group, an alkoxy group, a hydroxyl group or a halogen atom, each R⁴ being the same or different, and p³ is an integer of from 0 to 4; 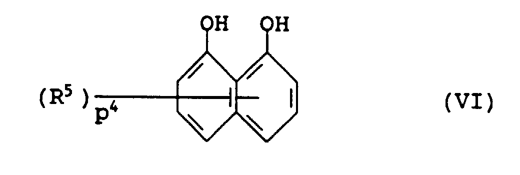 wherein R⁵ is an alkyl group of from 1 to 10 carbon atoms, a substituted or unsubstituted phenyl group, a substituted or unsubsituted aralkyl group, an alkoxy group, a hydroxyl group or a halogen atom, each R⁵ being the same or different, and p⁴ is an integer of from 0 to 4; 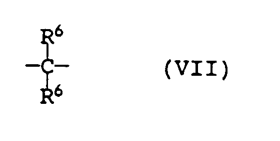 wherein R⁶ is a hydrogen atom, an alkyl group of from 1 to 10 carbon atoms, a substituted or unsubstituted phenyl group, a substituted or unsubstituted aralkyl group, an alkoxy group, a hydroxyl group or a halogen atom, each R⁶ being the same or different; 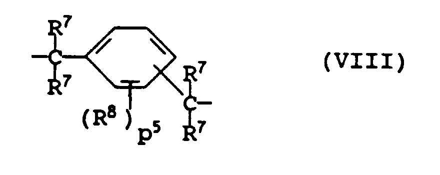 wherein R⁷ and R⁸ are each a hydrogen atom, an alkyl group of from 1 to 10 carbon atoms, a substituted or unsubstituted phenyl group, a substituted or unsubstituted aralkyl group, an alkoxy group, a hydroxyl group or a halogen atom, R⁷ and R⁸ being either identical to each other or different, and p⁵ is an integer of from 0 to 4;

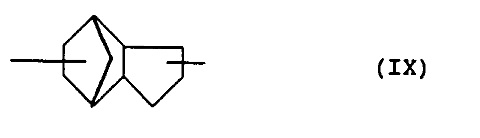

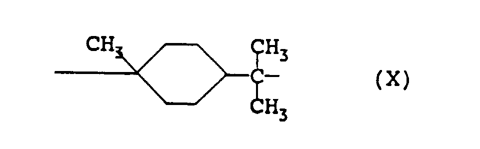

3. An epoxy resin composition as claimed in claim 2 wherein the polyhydric phenol resin curing agent is a compound of the general formula II wherein said group A is derived from:
i) a polyhydric phenol compound of the general formula III wherein p¹ is 0 (catechol),
ii) a polyhydric phenol compound of the general formula V wherein p³ is 0 (2,3-dihydroxynaphthalene) or
iii) a polyhydric phenol compound of the general formula III wherein p¹ is 1 and wherein R² is a hydroxyl group attached to the carbon atom in the 4 position (hydroxyhydroquinone).

4. An epoxy resin composition as claimed in any one of the claims 1 to 3 wherein the biphenol-type epoxy resin is:
i) a compound of the general formula I wherein each group R¹ is methyl or
ii) a 50:50 weight ratio mixture of: the compound defined under i) with a compound of the general formula I wherein each group R¹ is hydrogen.

5. An epoxy resin composition as claimed in any one of the claims 1 to 4 comprising of from 20 to 90 parts by weight, preferably of from 30 to 80 parts by weight of the polyhydric phenol resin curing agent per 100 parts by weight of the biphenol-type epoxy resin.

6. An epoxy resin composition as claimed in any one of the claims 1 to 5 further comprising a cure accelerator.

7. An epoxy resin composition as claimed in claim 6 wherein the cure accelerator is triphenylphosphine.

8. A process for the preparation of an epoxy resin composition as claimed in any one of the claims 1 to 7 wherein the biphenol-type epoxy resin and the polyhydric phenol resin curing agent are melted and mixed at elevated temperature optionally in the presence of other ingredients.

9. Articles comprising an epoxy resin composition as claimed in any one of the claims 1 to 7, in the cured state.

10. Use of an epoxy resin composition as claimed in any one of the claims 1 to 7, as an adhesive, as a casting composition, as a sealant, as a moulding composition and in the preparation of laminates.

## Patentansprüche

1. Epoxyharzzusammensetzung, die umfaßt:
(a) eine Epoxyverbindung vom Diphenol-Typ, dargestellt durch die nachstehende allgemeine Formel (I): 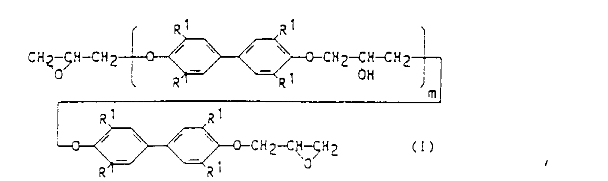 worin R¹ ein Wasserstoffatom, ein Halogenatom, eine Alkylgruppe mit 1-10 Kohlenstoffatomen, eine substituierte oder unsubstituierte Phenylgruppe, eine substituierte oder unsubstituierte Aralkylgruppe oder eine Alkoxygruppe bedeutet, wobei jeder Rest R¹ gleich oder verschieden ist und m eine Zahl mit einem Mittelwert im Bereich von 0 bis 5 ist; und
(b) ein mehrwertiges Phenolharz-Härtungsmittel, abgeleitet von einer mehrwertigen Phenolverbindung, die zwei oder mehrere phenolische Hydroxylgruppen an benachbarte Positionen am aromatischen Ring gebunden enthält, mit der Maßgabe, daß das Epoxyharz nicht 100 Gew.-%, bezogen auf das Gewicht des Epoxyharzes vom Diphenol-Typ, an einer Verbindung der allgemeinen Formel (I) enthält, worin sämtlichen Gruppen R¹ Wasserstoff bedeuten, und mit der Maßgabe, daß die Epoxyzusammensetzung nicht ein Harzgemisch umfaßt, das durch Dispergieren eines Gemisches aus einem vinylgruppenhältigen Organopolysiloxan und einem ≡ SiH-Gruppen enthaltenden Organopolysiloxan, dessen Gesamtverlust an flüchtigen Bestandteilen nach einem Erhitzen auf 105°C während drei Stunden nicht mehr als 3 Gew.-% beträgt, in der Form von Teiicnen in einem Dispersionsmedium, das ein Teil oder die Gesamtheit von wenigstens einem aus der Epoxyverbindung und der Phenolverbindung ist, erhalten worden ist, und in welchem das vinylgruppenhältige Organopolysiloxan mit dem ≡ SiH-Gruppen-enthaltenden Organopolysiloxan reagieren und härten gelassen werden.

2. Epoxyharzzusammensetzung nach Anspruch 1, worin das mehrwertige Phenolharz-Härtungsmittel (b) eine durch die nachstehende allgemeine Formel 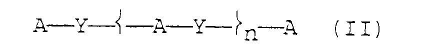 dargestellte Verbindung ist, in der A für eine einwertige oder zweiwertige Restgruppe, abgeleitet von einer mehrwerzigen Phenolverbindung, steht, die durch die nachfolgenden allgemeinen Formeln (III), (IV), (V) oder (VI) dargestellt ist, und jedes A gleich oder verschieden sein kann; Y eine zweiwertige Restgruppe ist, dargestellt durch die nachfolgenden allgemeinen Formeln (VII), (VIII), (IX) oder (X), und jedes Y gleich oder verschieden sein kann; n eine ganze Zahl mit einem Mittelwert im Bereich von 0 bis 10 ist; 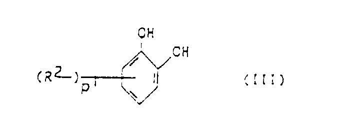 worin R² eine Alkylgruppe mit 1 bis 10 Kohlenstoffatomen, eine substituierte oder unsubstituierte Phenylgruppe, eine substituierte oder unsubstituierte Aralkylgruppe, eine Alkoxygruppe, eine Hydroxylgruppe oder ein Halogenatom bedeutet, jeder Rest R² gleich oder verschieden ist und p¹ für eine ganze Zahl von 0 bis 2 steht; 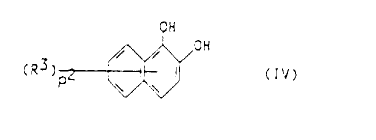 worin R³ eine Alkylgruppe mit 1 bis 10 Kohlenstoffatomen, eine substituierte oder unsubstituierte Phenylgruppe, eine substituierte oder unsubstituierte Aralkylgruppe, eine Alkoxygruppe, eine Hydroxylgruppe oder ein Halogenatom bedeutet, jeder Rest R³ gleich oder verschieden ist und p² für eine ganze Zahl von 0 bis 4 steht; 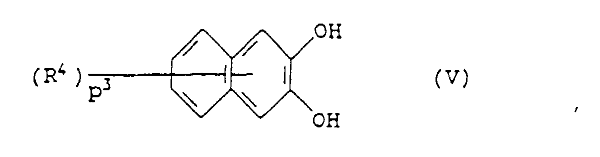 worin R⁴ eine Alkylgruppe mit 1 bis 10 Kohlenstoffatomen, eine substituierte oder unsubstituierte Phenylgruppe, eine substituierte oder unsubstituierte Aralkylgruppe, eine Alkoxygruppe, eine Hydroxylgruppe oder ein Halogenatom bedeutet, jeder Rest R⁴ gleich oder verschieden ist und p³ für eine ganze Zahl von 0 bis 4 steht; 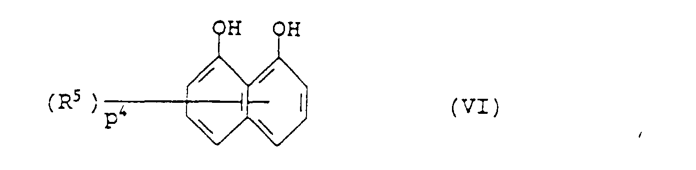 worin R⁵ eine Alkylgruppe mit 1 bis 10 Kohlenstoffatomen, eine substituierte oder unsubstituierte Phenylgruppe, eine substituierte oder unsubstituierte Aralkylgruppe, eine Alkoxygruppe, eine Hydroxylgruppe oder ein Halogenatom bedeutet, jeder Rest R⁵ gleich oder verschieden ist und p⁴ für eine ganze Zahl von 0 bis 4 steht; 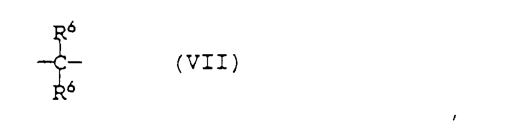 worin R⁶ ein Wasserstoffatom, eine Alkylgruppe mit 1 bis 10 Kohlenstoffatomen, eine substituierte oder unsubstituierte Phenylgruppe, eine substituierte oder unsubstituierte Aralkylgruppe, eine Alkoxygruppe, eine Hydroxylgruppe oder ein Halogenatom bedeutet, wobei jeder Rest R⁶ gleich oder verschieden ist; 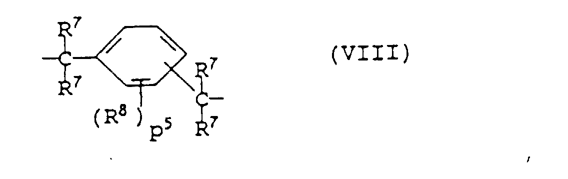 worin R⁷ und R⁸ jeweils ein Wasserstoffatom, eine Alkylgruppe mit 1 bis 10 Kohlenstoffatomen, eine substituierte oder unsubstituierte Phenylgruppe, eine substituierte oder unsubstituierte Aralkylgruppe, eine Alkoxygruppe, eine Hydroxylgruppe oder ein Halogenatom bedeuten, die Reste R⁷ und R⁸ entweder gleich oder voneinander verschieden sind und p⁵ für eine ganze Zahl von 0 bis 4 steht;

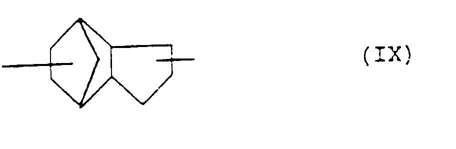

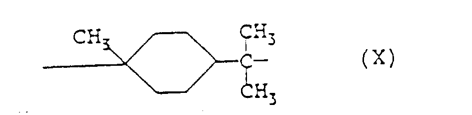

3. Epoxyharzzusammensetzung nach Anspruch 2, worin das mehrwertige Phenolharz-Härtungsmittel eine Verbindung der allgemeinen Formel (II) ist, worin die Gruppe A abgeleitet ist von:
i) einer mehrwertigen Phenolverbindung mit der allgemeinen Formel (III), worin p¹ den Wert 0 hat (Brenzcatechin),
ii) einer mehrwertigen Phenolverbindung der allgemeinen Formel (V), worin p³ den Wert 0 hat (2,3-Dihydroxynaphthalin) oder
iii) einer mehrwertigen Phenolverbindung der allgemeinen Formel (III), worin p¹ den Wert 1 aufweist und worin R² eine an das Kohlenstoffatom in der 4-Position gebundene Hydroxylgruppe ist (Hydroxyhydrochinon).

4. Epoxyharzzusammensetzung nach einem der Ansprüche 1 bis 3, worin das Epoxyharz vom Diphenol-Typ
i) eine Verbindung der allgemeinen Formel 1 ist, worin jede Gruppe R¹ Methyl bedeutet, oder
ii) ein 50:50-Gemisch (Gewichtsverhältnis) der unter i) definierten Verbindung mit einer Verbindung der allgemeinen Formel (I) ist, worin jede Gruppe R¹ Wasserstoff bedeutet.

5. Epoxyharzzusammensetzung nach einem der Ansprüche 1 bis 4, umfassend 20 bis 90 Gew.-Teile, vorzugsweise 30 bis 80 Gew.-Teile mehrwertiges Phenolharz-Härtungsmittel je 100 Gew.-Teile Epoxyharz vom Diphenol-Typ.

6. Epoxyharzzusammensetzung nach einem der Ansprüche 1 bis 5, das weiterhin einen Härtungsbeschleuniger umfaßt.

7. Epoxyharzzusammensetzung nach Anspruch 6, worin der Härtungsbeschleuniger Triphenylphosphin ist.

8. Verfahren zur Herstellung einer Epoxyharzzusammensetzung nach einem der Ansprüche 1 bis 7, worin das Epoxyharz vom Diphenol-Typ und das mehrwertige Phenolharz-Härtungsmittel geschmolzen und bei erhöhter Temperatur gemischt werden, gegebenenfalls in Anwesenheit weiterer Bestandteile.

9. Gegenstände, umfassend eine Epoxyharzzusammensetzung nach einem der Ansprüche 1 bis 7 im gehärteten Zustand.

10. Verwendung einer Epoxyharzzusammensetzung nach einem der Ansprüche 1 bis 7 als ein Klebstoff, eine Gießzusammensetzung, ein Dichtmittel, eine Formzusammensetzung und in der Herstellung von Laminaten.

## Revendications

1. Composition époxy comprenant :
(a) un composé époxy du type biphénol représenté par la formule générale (I) suivante : 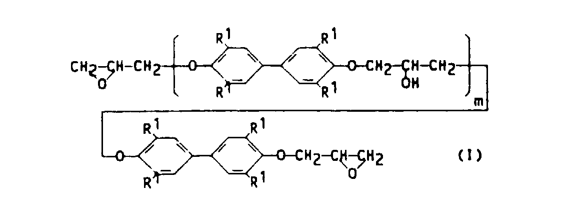 dans laquelle R¹ est un atome d'hydrogène, un atome d'halogène, un groupe alkyle de 1 à 10 atomes de carbone, un groupe phényle substitué ou non substitué, un groupe aralkyle substitué ou non substitué ou un groupe alcoxy, chacun des R³ étant identique ou différent, et m est un nombre ayant une valeur moyenne dans la gamme de 0 à 5; et
(b) un agent durcisseur de résine de phénol polyatomique provenant d'un composé de phénol polyatomique comportant deux groupes hydroxyle phénoliques ou plus fixés à des positions adjacentes sur le noyau aromatique, pour autant que la résine époxy ne contienne pas 100 % en poids, par rapport au poids de la résine époxy du type biphénol, du composé de la formule générale (I) dans laquelle tous les groupes R¹ sont de l'hydrogène, et pour autant que la composition époxy ne comprenne pas un mélange de résine obtenu en dispersant, sous la forme de matières particulaires, dans un milieu de dispersion qui est une partie ou la totalité d'au moins un des composés parmi le composé époxy et le composé phénolique, un mélange d'un organopolysiloxane contenant un groupe vinyle et d'un organopolysiloxane contenant un groupe ≡ SiH dont la perte de matière volatile totale après chauffage à 105°C pendant trois heures n'est pas supérieure à 3 % en poids,
et dans laquelle l'organopolysiloxane contenant un groupe vinyle et l'organopolysiloxane contenant un groupe ≡ SiH sont amenés à réagir l'un avec l'autre et à durcir.

2. Composition de résine époxy suivant la revendication 1, dans laquelle l'agent durcisseur de résine de phénol polyatomique (b) est un composé représenté par la formule générale (II) suivante : 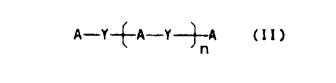 dans laquelle A est un groupe résiduel monovalent ou divalent provenant d'un composé de phénol polyatomique représenté par la formule générale (III), (IV), (V) ou (VI) suivante, et chaque A peut être identique ou différent, Y est un groupe résiduel divalent représenté par la formule générale (VII), (VIII), (IX) ou (X), et chaque Y peut être identique ou différent, n est un nombre ayant une valeur moyenne de 0 à 10; 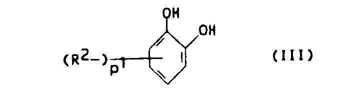 dans laquelle R² est un groupe alkyle dans la gamme de 1 à 10 atomes de carbone, un groupe phényle substitué ou non substitué, un groupe aralkyle substitué ou non substitué, un groupe alcoxy, un groupe hydroxyle ou un atome d'halogène, chaque R² étant identique ou différent, et p¹ est un nombre entier de 0 à 2; 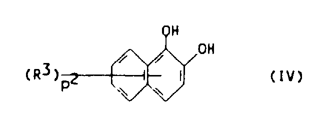 dans laquelle R³ est un groupe alkyle dans la gamme de 1 à 10 atomes de carbone, un groupe phényle substitué ou non substitué, un groupe aralkyle substitué ou non substitué, un groupe alcoxy, un groupe hydroxyle ou un atome d'halogène, chaque R³ étant identique ou différent, et p² est un nombre entier de 0 à 4; 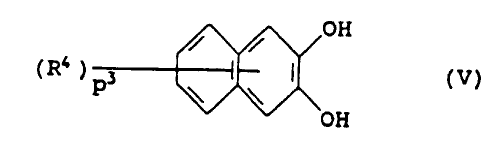 dans laquelle R⁴ est un groupe alkyle dans la gamme de 1 à 10 atomes de carbone, un groupe phényle substitué ou non substitué, un groupe aralkyle substitué ou non substitué, un groupe alcoxy, un groupe hydroxyle ou un atome d'halogène, chaque R⁴ étant identique ou différent, et p³ est un nombre entier de 0 à 4; 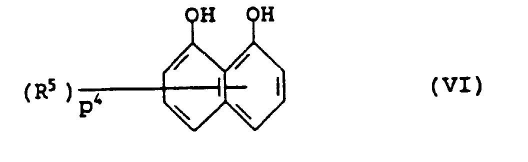 dans laquelle R⁵ est un groupe alkyle dans la gamme de 1 à 10 atomes de carbone, un groupe phényle substitué ou non substitué, un groupe aralkyle substitué ou non substitué, un groupe alcoxy, un groupe hydroxyle ou un atome d'halogène, chaque R⁵ étant identique ou différent, et p⁴ est un nombre entier de 0 à 4; 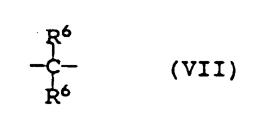 dans laquelle R⁶ est un atome d'hydrogène, un groupe alkyle dans la gamme de 1 à 10 atomes de carbone, un groupe phényle substitué ou non substitué, un groupe aralkyle substitué ou non substitué, un groupe alcoxy, un groupe hydroxyle ou un atome d'halogène, chaque R⁶ étant identique ou différent; 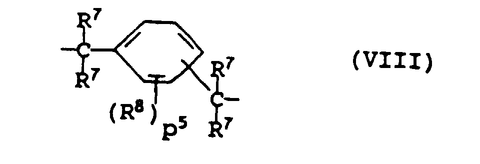 dans laquelle R⁷ et R⁸ sont chacun un atome d'hydrogène, un groupe alkyle dans la gamme de 1 à 10 atomes de carbone, un groupe phényle substitué ou non substitué, un groupe aralkyle substitué ou non substitué, un groupe alcoxy, un groupe hydroxyle ou un atome d'halogène, R⁷ et R⁸ étant identiques l'un à l'autre ou différents, et p⁵ est un nombre entier de 0 à 4;

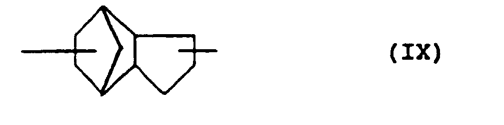

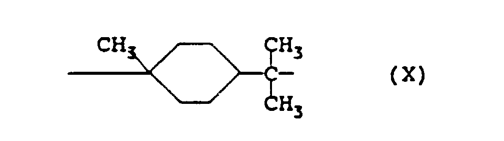

3. Composition de résine époxy suivant la revendication 2, dans laquelle l'agent durcisseur de résine de phénol polyatomique est un composé de la formule générale II dans laquelle le groupe A provient :
i) d'un composé de phénol polyatomique de la formule générale III dans laquelle p¹ est égal à 0 (catéchol),
ii) d'un composé de phénol polyatomique de la formule générale V dans laquelle p³ est égal à 0 (2,3-dihydroxynaphtalène) ou
iii) d'un composé de phénol polyatomique de la formule générale III dans laquelle p¹ est égal à 1 et dans laquelle R² est un groupe hydroxyle fixé à l'atome de carbone en position 4 (hydroxyhydroquinone).

4. Composition de résine époxy suivant l'une quelconque des revendications 1 à 3, dans laquelle la résine époxy du type biphénol est :
i) un composé de la formule générale I dans laquelle chaque groupe R¹ est du méthyle ou
ii) un mélange d'un rapport en poids de 50/50 du composé défini sous i) avec un composé de la formule générale I dans laquelle chaque groupe R¹ est de l'hydrogène.

5. Composition de résine époxy suivant l'une quelconque des revendications 1 à 4, comprenant de 20 à 90 parties en poids, avantageusement de 30 à 80 parties en poids de l'agent durcisseur de résine de phénol polyatomique pour 100 parties en poids de la résine époxy du type biphénol.

6. Composition de résine époxy suivant l'une quelconque des revendications 1 à 5, comprenant de plus un accélérateur de durcissement.

7. Composition de résine époxy suivant la revendication 6, dans laquelle l'accélérateur de durcissement est de la triphénylphosphine.

8. Procédé de préparation d'une composition de résine époxy suivant l'une quelconque des revendications 1 à 7, dans lequel la résine époxy du type biphénol et l'agent durcisseur de résine de phénol polyatomique sont fondus et mélangés à température élevée éventuellement en présence d'autres ingrédients.

9. Articles comprenant une composition de résine époxy suivant l'une quelconque des revendications 1 à 7, à l'état durci.

10. Utilisation d'une composition de résine époxy suivant l'une quelconque des revendications 1 à 7, comme adhésif, comme composé de coulée, comme agent d'étanchéité, comme composition de moulage et dans la préparation de stratifiés.
